# EUROPÄISCHE PATENTSCHRIFT

(11) **EP 2 033 845 B1**
(45) Veröffentlichungstag und Bekanntmachung des Hinweises auf die Patenterteilung: **23.10.2013**
(21) Anmeldenummer: 08015086.5
(22) Anmeldetag: 27.08.2008
(51) Int. Cl.: B60R 9/06

(54) **Lastenträger**
Load bearer
Support de charge

(30) Priorität: 07.09.2007 DE 102007042769
(43) Veröffentlichungstag der Anmeldung: 11.03.2009
(73) Patentinhaber: WESTFALIA - Automotive GmbH, 33378 Rheda-Wiedenbrück (DE)
(72) Erfinder: Benda, Thomas, 37574 Einbeck (DE); Söffge, Friedhelm, 71229 Leonberg (DE)
(74) Vertreter: Bregenzer, Michael

(56) Entgegenhaltungen:
- DE-A1- 10 338 723
- DE-A1-102005 061 449
- US-A- 4 951 991

## Beschreibung

Die Erfindung betrifft einen Lastenträger, insbesondere einen Fahrradträger, für ein Kraftfahrzeug, insbesondere einen Personenkraftwagen, mit einer Tragstruktur zum Tragen einer Last, und mit einer Schiebelagerung, an der die Tragstruktur verschieblich gelagert ist, gemäß dem Oberbegriff des Anspruchs 1.

Ein derartiger Lastenträger geht aus DE 103 38 723 A1 hervor.

Ein Lastenträger mit einer Schiebelagerung ist beispielsweise in der nicht vorveröffentlichten deutschen Patentanmeldung DE 10 2007 023 495 beschrieben. Mit Hilfe der Schiebelagerung kann die Tragstruktur schubladenartig aus dem Heck des Kraftfahrzeuges herausgezogen werden, so dass die Tragstruktur eine Ladefläche zum Beladen mit einer Last, beispielsweise Fahrrädern, bereitstellt.

Aus der DE 101 44 550 C2 ist ein Lastenträger mit einem nach hinten, in Fahrzeuglängsrichtung ausklapparen Trägerteil bekannt.

Die DE 101 44 550 C2 betrifft einen Lastenträger, der um eine vertikale Achse am Heck des Kraftfahrzeuges schwenkbar gelagert ist. So kann die Tragstruktur unter das Heck des Fahrzeugs hinunter oder daraus hervor geschwenkt werden. Der Lastenträger hat ein Basis-Trägerteil, das am Kraftfahrzeug befestigt ist, und ein an diesem schwenkbar gelagertes Ausklapp-Trägerteil.

Der vorgenannte Lastenträger benötigt beim Fahrbetrieb des Fahrzeugs auch dann, wenn er nicht gebraucht wird, Bauraum. Somit ist der Böschungswinkel bzw. die Bodenfreiheit des Kraftfahrzeuges eingeschränkt.

Wenn man diesen Nachteil vermeiden will, eignet sich der eingangs erwähnte Lastenträger der gemäß DE 10 2007 023 495. Es muss allerdings ein Schubladen-Aufnahmeraum in der Karosserie des Kraftfahrzeuges bereitgestellt werden. Dieser Schubladen-Aufnahmeraum verkleinert jedoch die Lastaufnahmekapazität, beispielsweise das Gepäckabteil, des Kraftfahrzeuges. Eine Reserveradmulde oder dergleichen ist nicht mehr im Bodenbereich des Gepäckabteils anbringbar.

Es ist daher die Aufgabe der vorliegenden Erfindung, einen Lastenträger für ein Kraftfahrzeug bereitzustellen, der bei Nichtgebrauch platzsparend und den Böschungswinkel des Kraftfahrzeuges nicht oder wenig beeinträchtigend in einem im wesentlichen verdeckten Ruhestellungsbereich im Heckbereich des Kraftfahrzeuges angeordnet werden kann und beim Verlagern zwischen der Nichtgebrauchsstellung und der Gebrauchsstellung einen geringen Raumbedarf aufweist.

Zur Lösung der Aufgabe ein Lastenträger gemäß der technischen Lehre des Anspruchs 1 vorgesehen.

Im Rahmen der Erfindung ist es möglich, nur einen Abschnitt der Tragstruktur in seiner jeweiligen Höhe zu verstellen, so dass eine Neigung der Tragstruktur bezüglich der Horizontalen verstellt wird. Hierzu weist die Lageranordnung beispielsweise eine Schwenklageranordnung auf.

Die Tragstruktur ist bezüglich der Karosserie des Kraftfahrzeuges zweckmäßigerweise als Ganzes höhenverstellbar und verschieblich. Die Tragstruktur kann somit an einem unteren Bereich des Kraftfahrzeuges vorbei nach hinten vor das Heck des Kraftfahrzeuges vorgezogen werden, wo sie dann zum Beladen mit der Last, beispielsweise Fahrrädern, Gepäckstücken und dergleichen, zur Verfügung steht.

Mit Hilfe einer Höhenverstelleinrichtung kann die Schiebelagerung zwischen einer oberen, von einer fahrbahnentfernteren Stellung und einer unteren, zu der Fahrbahn näheren Stellung verlagert werden.

Auch eine Kombination von Schwenklagerung und Höhenverstellung der Schiebelagerung ist vorteilhaft, wobei die Schwenklageranordnung und die Höhenverstelleinrichtung in Fahrzeuglängsrichtung des Kraftfahrzeuges zueinander beabstandet ist. Die Höhenverstelleinrichtung verstellt beispielsweise einen Schwenkwinkel der Schiebelagerung um eine vorzugsweise horizontale Schwenkachse, die durch die Schwenklageranordnung definiert ist. Die Schwenklageranordnung ist vorzugsweise weiter vorn als die Höhenverstelleinrichtung bezüglich des Hecks des Kraftfahrzeuges angeordnet. Aber auch die umgekehrte Konfiguration ist möglich, bei der die Schwenklageranordnung näher beim Heck des Kraftfahrzeuges ist als die Höhenverstelleinrichtung.

Ferner ist es im Rahmen der Erfindung möglich, dass die Schiebelagerung ausschließlich schwenkbar oder ausschließlich höhenverstellbar ist. Bei der ausschließlichen Höhenverstellung ist es vorteilhaft, wenn eine Führung zum Führen der Schiebelagerung in konstanter Neigung zur Horizontalen oder in Horizontallage beim Verstellen zwischen der oberen und der unteren, zur Fahrbahn näheren Stellung vorgesehen ist. Die Führung kann beispielsweise durch zwei in Fahrzeuglängsrichtung zueinander beabstandete Bestandteile der Höhenverstelleinrichtung realisiert sein.

Die Schiebelagerung ist zweckmäßigerweise an der Höhenverstelleinrichtung schwenkbar gelagert. Somit sind zwei Schwenkfreiheitsgrade vorhanden, nämlich einerseits bei der Schwenklageranordnung und andererseits bei der schwenkbaren Lagerung der Schiebelagerung an der Höhenverstelleinrichtung.

Die Höhenverstelleinrichtung weist zweckmäßigerweise einen linearen Verstellweg auf. Die Höhenverstelleinrichtung ist somit eine Linear-Höhenverstelleinrichtung.

In der Gebrauchsstellung ist die Tragstruktur vorzugsweise oberhalb der Auszugsstellung. Beispielsweise wird die Tragstruktur nach dem Ausziehen nach hinten vor das Heck des Kraftfahrzeuges wieder nach oben geschwenkt und oder linear nach oben verstellt. Die Handhabungsfolge ist dann Senken der Tragstruktur, Ausziehen oder Einschieben der Tragstruktur und Anheben der Tragstruktur. Wenn die Tragstruktur nach dem Ausziehen aus dem Heckbereich des Kraftfahrzeuges wieder nach oben verlagert wird, macht sie insgesamt eine Tauchbewegung zwischen der Nichtgebrauchsstellung und der Gebrauchsstellung durch, die unter einem Stoßfänger des Kraftfahrzeuges hindurch führt.

Es versteht sich, dass die untere Stellung der Tragstruktur, die der Auszugstellung entspricht, auch die Gebrauchsstellung sein kann.

Zweckmäßigerweise ist die Höhenverstelleinrichtung manuell, beispielsweise mit Hilfe eines Kurbeltriebs oder dergleichen, betätigbar. Auch eine Seilzuganordnung, ein Zahnradgetriebe oder dergleichen Getriebe, ist möglich.

Jedenfalls ist ein selbsthemmendes Getriebe bei der Schwenklageranordnung und/oder der Höhenverstelleinrichtung und/oder der Schiebelagerung vorteilhaft.

Die Bedienung des Lastenträgers wird vorzugsweise durch eine Motoranordnung zum Verlagern der Tragstruktur auf zumindest einem Teilabschnitt einer Bewegung zwischen der Nichtgebrauchsstellung und der Gebrauchsstellung erleichtert. Die Motoranordnung kann zum Verlagern der Tragstruktur zwischen den Endstellungen, d. h. der Gebrauchsstellung und der Nichtgebrauchsstellung, oder auch nur für einen Teilabschnitt dazwischen vorgesehen sein. Ein solcher Teilabschnitt wird beispielsweise dadurch motorisch unterstützt, wenn die Motoranordnung einen Motor zum Antrieb der Höhenverstelleinrichtung umfasst. Die Schiebeoperation, d. h. das Ausziehen bzw. Einschieben der Tragstruktur entlang der Schiebelagerung wird vorzugsweise manuell durchgeführt. Aber auch hierfür ist ein motorisches Antriebskonzept denkbar.

Die Höhenverstelleinrichtung weist vorzugsweise eine Spindelanordnung zur Höhenverstellung der Schiebelagerung auf. Die Spindelanordnung ist zweckmäßigerweise selbsthemmend, so dass die Höhenverstelleinrichtung in ihrer einmal eingestellten Höhenposition bleibt.

Die Tragstruktur ist vorzugsweise mehrteilig. Sie hat z. B. ein an der Schiebelagerung verschieblich gelagertes Basisteil und mindestens einen im Basisteil gelagertes Auslegerteil, das in seiner jeweiligen Gebrauchsstellung vor das Basisteil vorsteht, z. B. hinten oder seitlich. Auslegerteile können beispielsweise in Fahrzeugquerrichtung ausschwenkbare und/oder ausziehbare Fahrradträgerrinnen sein.

Das Auslegerteil ist vorzugsweise an dem Basisteil schwenkbeweglich und/oder verschieblich gelagert. Vorzugsweise ist das Auslegerteil ein nach hinten ausschwenkbares Auslegerteil.

Sowohl das Basisteil als auch das Auslegerteil können zweckmäßigerweise eine Art Leiterstruktur aufweisen. Dabei ist es möglich, dass in Fahrzeugquerrichtung verlaufende Quertraversen oder Sprossen eine Krümmung aufweisen, beispielsweise zum Anpassen an eine Struktur der Karosserie des Fahrzeugs, z. B. eine Reserveradmulde.

Ferner hat die Tragstruktur mindestens eine Halterung, z. B. eine Steckaufnahme, eine Schraubaufnahme oder dergleichen, zum Halten eines Erweiterungsbauteils. Das Erweitungsbauteil ist vorzugsweise ein Erweiterungsgestell, das insbesondere leiterartig ausgestaltet ist, und beispielweise hinten an die Tragstruktur ansetzbar ist. Mit Hilfe des Erweiterungsbauteils ist die Lastauflagefläche der Tragstruktur vergrößerbar.

Ein Trägerteil, beispielsweise das vorgenannte Auslegerteil und/oder ein Ansteckbauteil, ist zweckmäßigerweise an der Tragstruktur zwischen einer für den Fahrbetrieb des Kraftfahrzeugs vorgesehenen Fahrstellung und einer zum Be- und Entladen des Kraftfahrzeugs vorgesehenen Ladestellung verstellbar. In der Ladestellung kann beispielsweise eine Heckklappe aufgeschwenkt werden, weil das Trägerteil mit der auf ihm angeordneten Last einen Schwenkbereich einer Heckklappe oder einer Hecktür des Kraftfahrzeuges freigibt.

Die Tragstruktur weist zweckmäßigerweise mindestens eine Fahrradhalterung zum Halten eines Fahrrades auf. Die Fahrradhalterung kann beispielsweise eine Rinne sein oder aber auch ein zweckmäßigerweise aufstellbarer Träger oder Bügel, der das Fahrrad in horizontaler Richtung stützt.

Nachfolgend werden Ausführungsbeispiele der Erfindung anhand der Zeichnung erläutert. Es zeigen:
- Figur 1: ein erstes Ausführungsbeispiel eines erfindungsge- mäßen Lastenträgers, der schwenkbar und höhenver- stellbar im Heck eines Fahrzeuges gelagert ist in Nichtgebrauchsstellung,
- Figur 2: den Lastenträger gemäß Figur 2 beim Verstellen zwi- schen seiner Nichtgebrauchsstellung und einer in
- Figur 3: dargestellten Gebrauchsstellung,
- Figur 4: den Lastenträger gemäß Figur 3 in einer zum Be- und Entladen des Kraftfahrzeuges vorgesehenen Ladestel- lung,
- Figur 5: den Lastenträger gemäß der vorstehenden Figuren von oben mit einem an einem Basisteil schwenkbar gela- gerten Auslegerteil,
- Figur 6: eine Abwandlung des Lastenträgers gemäß Figur 5, wobei das Auslegerteil verschieblich an dem Basis- teil gelagert ist,
- Figur 7: einen Schnitt des Lastenträgers gemäß Figur 5 ent- lang einer Linie A-A,
- Figur 8: ein zweites Ausführungsbeispiel eines erfindungsge- mäßen Lastenträgers, der nicht schwenkbar ist, in seiner Nichtgebrauchsstellung,
- Figur 9: den Lastenträger gemäß Figur 8 beim Verstellen zwi- schen seiner Nichtgebrauchsstellung in seine in
- Figur 10: dargestellte Gebrauchsstellung.

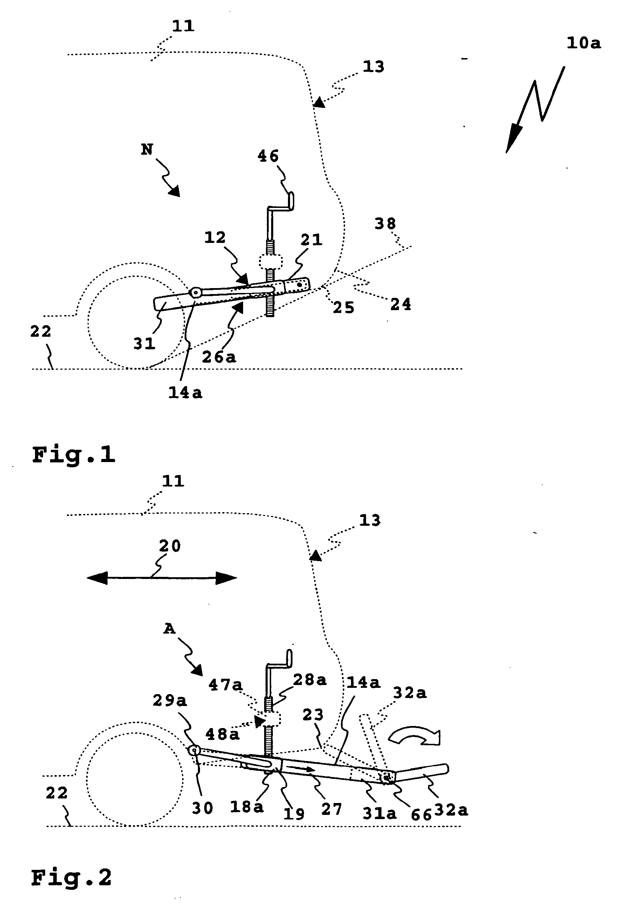

Ein Lastenträger 10a ist an einem schematisch dargestellten Kraftfahrzeug 11 zwischen einer Nichtgebrauchsstellung N (Figur 1) und einer Gebrauchsstellung G verstellbar. In der Nichtgebrauchsstellung N ist eine Tragstruktur 14a zwischen einem im Heckbereich 13 des Kraftfahrzeugs 11 vorgesehenen Ruhestellungsbereich 12 angeordnet. In der Gebrauchsstellung G steht die Tragstruktur 14a zumindest teilweise vor den Heckbereich 13 des Kraftfahrzeuges 11 vor, so dass eine Last 15, z. B. Fahrräder 16, auf einer durch die Tragstruktur 14a aufgespannten Lastauflagefläche 17 abgestellt werden können.

Zum Verlagern zwischen der Gebrauchsstellung G und der Nichtgebrauchsstellung N ist eine Schiebelagerung 18a mit zwei in Fahrzeugquerrichtung zueinander beabstandeten Schiebeführungen 19 vorgesehen, so dass die Tragstruktur 14a in Fahrzeuglängsrichtung 20 verschieblich ist.

Der Ruhestellungsbereich 12 umfasst einen Ruhestellungsraum 21, der zumindest teilweise von einer Fahrbahn 22 weiter entfernt ist als ein unterer Abschnitt 23 einer Heckpartie 24 des Kraftfahrzeugs 11, beispielsweise ein Stoßfänger 25.

Damit nun die Tragstruktur 14a in den Ruhestellungsraum 21 hinein oder aus diesen heraus verlagert werden kann, ist eine Lageranordnung 26a vorgesehen. Mittels der Lageranordnung 26a ist die Schiebelagerung 18a beweglich bezüglich des Kraftfahrzeuges 11 gelagert, so dass ein Abschnitt 27, beim Ausführungsbeispiel der hintere, zum Heck des Kraftfahrzeuges 11 nähere Bereich der Tragstruktur 14a, zwischen einer oberen, von der Fahrbahn 22 entfernteren Stellung, die beispielsweise in Figur 1 dargestellt ist, und einer unteren, zu der Fahrbahn 22 näheren Auszugsstellung A verstellbar ist. In der Auszugsstellung A kann die Tragstruktur 14a in Fahrzeuglängsrichtung 20 verschoben werden.

Die Lageranordnung 26a umfasst eine Höhenverstelleinrichtung 28a sowie eine Schwenklageranordnung 29. Die Höhenverstelleinrichtung 28a ist bezüglich der Fahrzeuglängsrichtung 20 weiter hinten, die Schwenklageranordnung 29 in Fahrzeuglängsrichtung 20 weiter vorn in dem Kraftfahrzeug 11 angeordnet. Mittels der Schwenklageranordnung 29 ist die Schiebelagerung 18a um eine horizontale Schwenkachse 30 schwenkbar. Mit Hilfe der Höhenverstelleinrichtung 28a ist die Schiebelagerung 18a höhenverstellbar.

Mit Hilfe der Höhenverstelleinrichtung 28a und der Schwenklageranordnung 29 sind die Schiebelagerung 18a und die an ihr verschieblich geführte Tragstruktur 14a sowohl höhenverstellbar als auch in ihrer Neigung verstellbar. Dies ermöglicht eine Durchtauchbewegung der Tragstruktur 14a unter dem Stoßfänger 25 hindurch, was in Figur 2 ersichtlich ist. Die Tragstruktur 14a steht dann soweit nach unten vor den unteren Abschnitt 23 der Heckpartie 24 vor und ist derart geneigt, dass ein an einem Basisteil 31a der Tragstruktur 14a schwenkbeweglich gelagertes Auslegerteil 32a zwischen einer eingeklappten Stellung (Figur 1) und einer ausgeklappten Stellung, schwenkbar ist, die in Figur 2 mit durchgezogenen Linien dargestellt ist. Durch das Verfahren der Tragstruktur 14a nach unten und zudem das Neigen der Tragstruktur 14a in eine Schrägposition zur Horizontalen wird ein Schwenkbereich zum Schwenken des Auslegerteils 32a freigegeben, was aus Figur 2 ersichtlich ist.

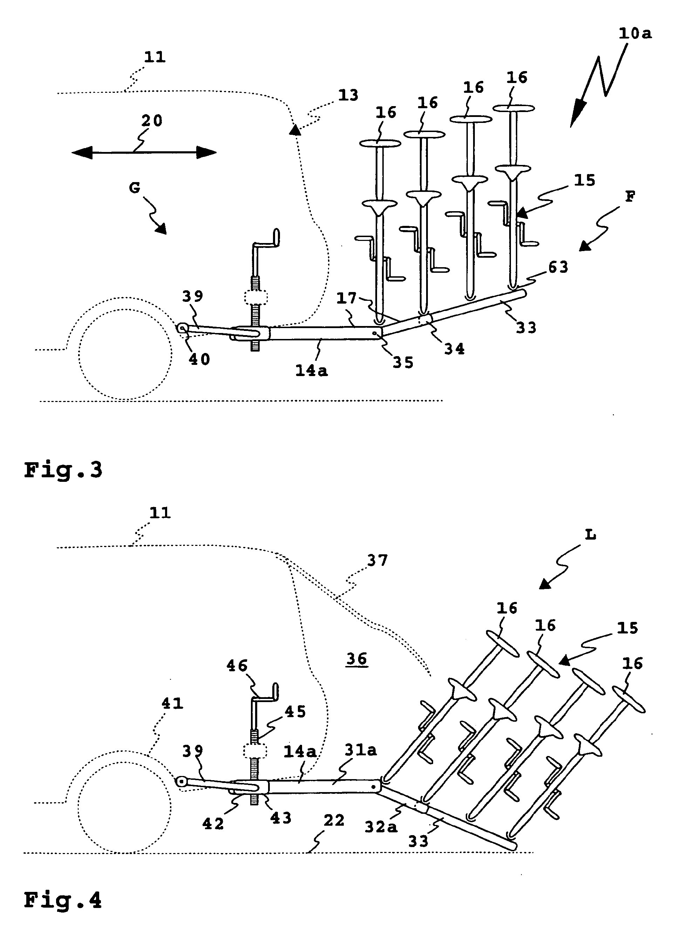

Wenn das Auslegerteil nach außen geschwenkt ist, wird die Tragstruktur 14a mit Hilfe der Lageranordnung 26a wieder nach oben verlagert, so dass sie die in Figur 3 dargestellte Gebrauchsstellung G einnimmt. Dann steht der Lastenträger 10a zum Beladen mit der Last 15 zur Verfügung.

An das Auslegerteil 32a kann ein Erweiterungsbauteil 33 angebaut werden, das beispielsweise in Steckaufnahmen 34 am Auslegerteil 32a eingesteckt ist. Das Erweiterungsbauteil 33 vergrößert die zum Aufliegen der Last 15 bereitgestellte Lastauflagefläche 17 des Lastenträgers 10a.

Das mit dem Erweiterungsbauteil 33 versehene Auslegerteil 32a kann auch in der Gebrauchsstellung G des Lastenträgers 10a um seine Schwenkachse 35 zwischen einer Fahrstellung F und einer Ladestellung L geschwenkt werden. In der Fahrstellung F ist das Basisteil 31a mit dem optional angebauten Erweiterungsbauteil 33 nach oben geschwenkt, so dass ein großer Abstand zur Fahrbahn 22 vorhanden ist. In der Ladestellung L hingegen ist das Basisteil 31a nach unten geschwenkt, wobei zweckmäßigerweise ein freier Endbereich des Erweiterungsbauteils 33 auf der Fahrbahn 22 aufliegt, so dass er gestützt ist. Dann ist auch die auf dem Auslegerteil 32a aufgelegte Last 15, vorliegend die Fahrräder 16, so weit vom Heckbereich 13 des Kraftfahrzeugs 11 weggeschwenkt, dass ein Schwenkbereich 36 für eine Heckklappe 37 des Kraftfahrzeuges 11 freigegeben ist.

In der Nichtgebrauchsstellung N ist der Lastenträger 10a vor den Blicken eines hinter dem Kraftfahrzeug 11 stehenden Betrachters verborgen. Beispielsweise befindet sich der Lastenträger 10a oberhalb einer Sichtlinie 38 von 15 - 30°. Die Sichtlinie 38 korrespondiert zweckmäßigerweise mit einem Böschungswinkel des Kraftfahrzeugs 11, den dieses auch dann hat, wenn kein Lastenträger 10a vorhanden ist.

Die Schiebeführungen 19 sind an Schwenkträgerteilen 39 vorgesehen, die in Fahrzeugquerrichtung zueinander beabstandet sind. Die Schwenkträgerteile 39 sind an am Kraftfahrzeug 11 festgelegten Schwenklagern 40 schwenkbeweglich gelagert. Die Schwenkträgerteile 39 sind beispielsweise Schwenkarme, die sich von den Schwenklagern 40 weg nach hinten erstrecken. Die Schwenklager 40 sind beispielsweise an Fahrzeuglängsträgern einer Karosserie 41 des Kraftfahrzeuges 11 befestigt.

Von den Schwenklagern 40 entfernte Enden der Schwenkträgerteile 39, z.B. freie Enden, weisen Linearführungen 42, beispielsweise u-förmige Führungen oder auch Buchsen 43 auf. U-förmige Linearführungen 42 sind zweckmäßigerweise einander gegenüberliegend offen.

Die Schwenkträgerteile 39 sind durch eine Quertraverse 44 miteinander gekoppelt. An der Quertraverse 44 greift ein Spindeltrieb 45 an, der mit einer Kurbel 46 und/oder alternativ motorisch mit einem Motor 47a einer Motoranordnung 48 betätigbar ist.

Mit Hilfe des Spindeltriebs 45 sind freie, vom Schwenklager 40 entfernte Enden 49 der Schwenkträgerteile 39 höhenverstellbar, so dass sie um die Schwenkachse 30 schwenken.

Dabei wird auch die an den Linearführungen 42 geführte Tragstruktur 14a geschwenkt. Zudem wird ihr Abstand zur Fahrbahn 22 verändert.

Die Teile 31a, 32a und 33 der Tragstruktur 14a sind vorzugsweise rahmenartig, insbesondere leiterrahmenartig.

Das Basisteil 31a umfasst zwei in Fahrzeuglängsrichtung verlaufende Längsträger 50, die an den Linearführungen 42 längsverschieblich gelagert sind. Die Längsträger 50 haben beispielsweise ein rechteckiges Profil, insbesondere ein quadratischen Profil. Die Längsträger 50 bestehen beispielsweise aus einem faserverstärkten Kunststoff oder Leichtmetall.

An den freien Enden 51 der Längsträger 50 ist das Auslegerteil 32a an einer Schwenklagerung 66 schwenkbeweglich gelagert. Zwischen den Längsträgern 50 erstreckt sich ein Rohr 52, das durch im Inneren der Längsträger 50 angeordnete Halter 53 gehalten wird. Das Rohr 52 durchdringt einander gegenüberliegende Öffnungen 54 der Längsträger 50 und ist mit den Haltern 53 drehfest verbunden. Eine Außenkontur der Halter 53 korrespondiert mit einer Innenkontur der Längsträger 50.

Auf dem Rohr 52 sind Längsarme 55 des Auslegerteils 32a schwenkbeweglich gelagert. Die Längsarme 55 werden von Lagerhülsen 56 durchdrungen, die mit den Längsarmen 55 drehfest verbunden sind und auf dem Rohr 52 drehen.

Das Rohr 52 bildet eine Quertraverse des Basisteils 31a, auf dem bereits eine Last aufgelegt werden kann. In Fahrzeuglängsrichtung 20 beabstandet zu dem Quertraversen-Rohr 52 ist eine Quertraverse 57 am in Gebrauchsstellung G freien Endbereich des Auslegerteils 32a. Auch die Quertraverse 57 dient zum Auflegen einer Last, beispielsweise eines Fahrrads 16.

Längsträger 58 des Erweiterungsbauteils 33 sind in die Steckaufnahmen 34 an den hinteren Enden der Längsarme 55 eingesteckt. Zwischen den beiden Längsträgern 58 erstrecken sich Quertraversen 59, 60 des Erweiterungsbauteils 33, die ebenfalls zum Auflegen einer Last geeignet sind. Die Quertraversen 60, 59, 57 sowie das Quertraversen-Rohr 52 sind zweckmäßigerweise äquidistant.

Zur Anpassung an eine untere Fahrzeugkontur der Karosserie 41, beispielsweise eine Reserveradmulde, können gebogene oder gekrümmte, gekröpfte oder in sonstiger Form verformte Quertraversen vorgesehen sein. Dies ist beispielsweise bei einer Quertraverse 57' realisiert, deren Krümmung an die Krümmung einer Reserveradmulde angepasst ist.

Das Falt-Auszugskonzept kann auch einen Vertikalträger 64 umfassen, der schwenkbeweglich an der Tragstruktur 14a angeordnet ist. Der Vertikalträger 64 (es können auch mehrere Vertikalträger vorgesehen sein) ist beispielsweise zwischen einer liegenden, im wesentlichen horizontalen Stellung, und einer vertikalen Stellung zum Halten der Last 15, z. B. der Fahrräder 16, schwenkbar. Die Schwenkachse des Vertikalträgers 64 korrespondiert mit der Schwenkachse des Auslegerteils 32a bezüglich des Basisteils 31a. In seiner Nichtgebrauchsstellung fluchtet der Vertikalträger 64 beispielsweise mit einem der Längsträger 50.

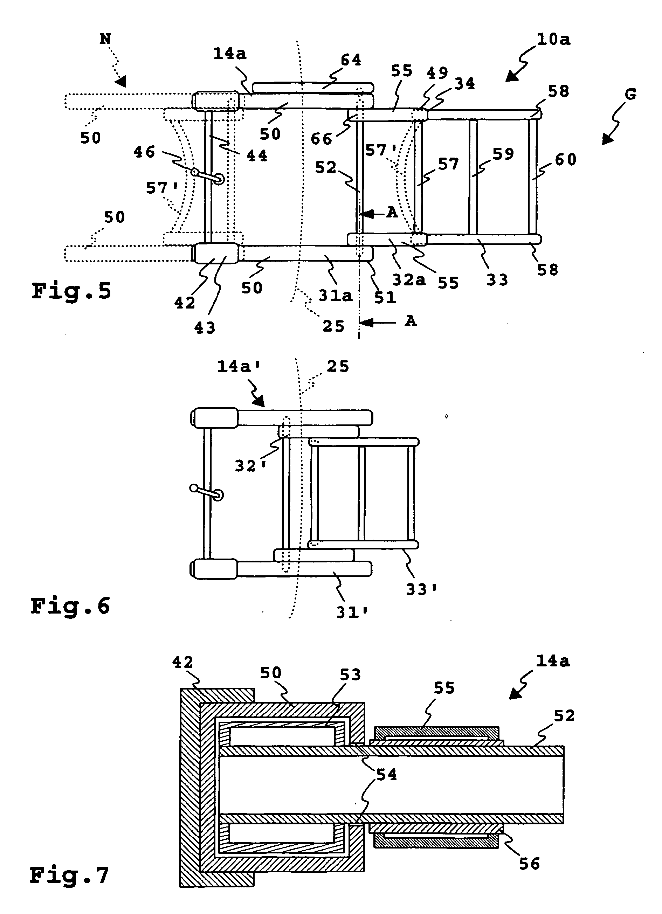

Ein alternatives Konzept, das in Figur 6 dargestellt ist, kann auch eine Verschieblichkeit von Bestandteilen einer erfindungsgemäßen Tragstruktur vorsehen. Dies ist beispielsweise bei einer Tragstruktur 14a' der Fall, bei dem ein Auslegerteil 32' an einem Basisteil 31' verschieblich gelagert ist. Ferner ist ein Erweiterungsbauteil 33' (optional) verschieblich am Auslegerteil 32a gelagert, so dass insgesamt eine teleskopierbare Tragstruktur 14a' gebildet ist.

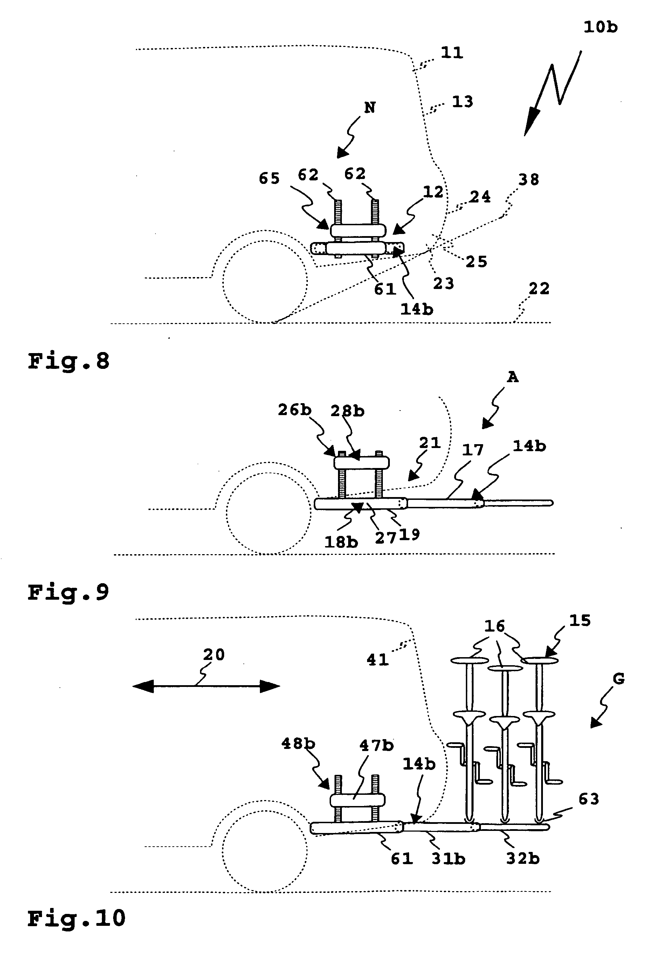

Eine Tragstruktur 14b eines Lastenträgers 10b gemäß Figuren 8 bis 10 bleibt bezüglich einer Horizontalen stets in derselben Neigungsstellung, vorliegend exakt horizontal, wenn sie zwischen ihrer Nichtgebrauchsstellung N und ihrer Gebrauchsstellung G sowie einer dazwischenliegenden Auszugsstellung A verstellt wird. Eine Schwenklagerung ist im Unterschied zu dem ersten Ausführungsbeispiel bei der Tragstruktur 14b nicht vorhanden.

Eine Höhenverstelleinrichtung 28b hat hierfür eine mit einem Motor 47b einer Motoranordnung 48b betätigbare Höhenverstelleinrichtung 28b.

Linearführungen 61, an denen die Tragstruktur 14b linear zwischen einer vorderen, der Nichtgebrauchsstellung N zugeordneten Position, und einer nach hinten ausgezogenen, der Gebrauchsstellung G zugeordneten Position verstellbar ist, sind mit Hilfe der Höhenverstelleinrichtung 28b höhenverstellbar. Beispielsweise verfahren Spindeln 62, die vom Motor 47b angetrieben werden, die Linearführungen 61 nach oben oder unten.

Die beiden Spindeln 62 der Höhenverstelleinrichtung 28b haben dieselbe Steigung, so dass eine Führung 65 zum Führen der Schiebelagerung 18b in konstanter Neigung gewährleistet ist.

In der in Figur 9 dargestellten unteren Position, sind die Linearführungen 61 so weit unter die Heckpartie 24 des Kraftfahrzeugs 11 nach unten verstellt, dass die Tragstruktur 14b nach hinten ausgezogen werden kann.

Die Tragstruktur 14b hat ein Basisteil 31b, an dem ein Auslegerteil 32b ausziehbar gelagert ist. Die Tragstruktur 14b ist teleskopierbar.

An der Oberseite der Tragstrukturen 14a, 14b sind Fahrradhalterungen 63 angeordnet, beispielsweise feststehende oder bezüglich der Tragstruktur 14a oder 14b bewegliche Rinnen zur Aufnahme von Rädern der Fahrräder 16. Die Rinnen können beispielsweise schwenkbeweglich oder verschieblich bezüglich der Tragstrukturen 14a oder 14b sein.

Die Darstellungen der Ausführungsbeispiele sind schematisch. Es versteht sich, dass auch Verriegelungseinrichtungen, beispielsweise zum Verriegeln der Teile 31a, 32a, 33 in ihrer jeweiligen Gebrauchsstellung, zum Festlegen einer Schwenk-und/oder Höhen- und/oder einer Linearauszugsposition der Tragstrukturen 14a, 14b oder dergleichen, vorgesehen sein können.

## Patentansprüche

1. Lastenträger für ein Kraftfahrzeug, insbesondere einen Personenkraftwagen, mit einer Tragstruktur (14a; 14a'; 14b) zum Tragen einer Last (15), und mit einer Schiebelagerung (18a; 18b), an der die Tragstruktur (14a; 14a'; 14b) verschieblich gelagert ist, wobei die Tragstruktur (14a; 14a'; 14b) zwischen einer Nichtgebrauchsstellung (N) und einer Gebrauchsstellung (G) verlagerbar ist, wobei die Tragstruktur (14a; 14a'; 14b) in der Gebrauchsstellung (G) zum Auflegen einer Last (15) nach hinten vor einen Heckbereich (13) des Kraftfahrzeugs (11) vorsteht, und in der Nichtgebrauchsstellung (N) in einem durch eine Heckpartie (24) des Kraftfahrzeugs (11) zumindest im wesentlichen verdeckten Ruhestellungsbereich (12) im Heckbereich (13) des Kraftfahrzeugs (11) angeordnet ist, wobei die Schiebelagerung (18a; 18b) beweglich bezüglich des Kraftfahrzeugs (11) an einer Lageranordnung (26a; 26b) gelagert ist, mit der ein Abschnitt der Tragstruktur (14a; 14a'; 14b) zwischen einer oberen, von einer Fahrbahn (22) entfernteren Stellung und einer unteren, zu der Fahrbahn (22) näheren Auszugsstellung (A) verstellbar ist, **dadurch gekennzeichnet, dass** die Lageranordnung (26a; 26b) eine Schwenklageranordnung (29) zum Schwenken der Tragstruktur (14a; 14a'; 14b) bezüglich einer Horizontalen aufweist, und dass die Tragstruktur (14a; 14a'; 14b) in der unteren Stellung an einem unteren Abschnitt (23) der Heckpartie (24), insbesondere einem Stoßfänger (25) des Kraftfahrzeugs (11), vorbei in Richtung des Ruhestellungsbereichs (12) oder aus diesem heraus mittels der Schiebelagerung (18a; 18b) verschoben werden kann.

2. Lastenträger nach Anspruch 1, **dadurch gekennzeichnet, dass** der höhenverstellbare Abschnitt der Tragstruktur (14a; 14a'; 14b) ein hinterer, zum Heck des Kraftfahrzeugs (11) näherer Bereich der Tragstruktur (14a; 14a'; 14b) ist.

3. Lastenträger nach Anspruch 1 oder 2, **dadurch gekennzeichnet, dass** die Lageranordnung (26a; 26b) eine Höhenverstelleinrichtung (28a, 28b) zum Verstellen der Schiebelagerung (18a; 18b) zwischen einer oberen, von einer Fahrbahn (22) entfernteren Stellung und einer unteren, zu der Fahrbahn (22) näheren Stellung umfasst.

4. Lastenträger nach Anspruch 3, **dadurch gekennzeichnet, dass** die Höhenverstelleinrichtung (28a, 28b) und die Schwenklageranordnung (29) in Fahrzeuglängsrichtung (20) des Kraftfahrzeug (11) zueinander beabstandet sind, wobei zweckmäßigerweise die Schwenklageranordnung (29) vom Heck des Kraftfahrzeugs (11) weiter als die Höhenverstelleinrichtung (28a, 28b) entfernt ist.

5. Lastenträger nach einem der Ansprüche 3 oder 4, **dadurch gekennzeichnet, dass** die Schiebelagerung (18a; 18b) an der Höhenverstelleinrichtung (28a, 28b) schwenkbar gelagert ist.

6. Lastenträger nach einem der Ansprüche 3 bis 5, **dadurch gekennzeichnet, dass** die Höhenverstelleinrichtung (28a, 28b) eine Linear-Höhenverstelleinrichtung (28a, 28b) ist und/oder dass die Tragstruktur (14a; 14a'; 14b) in der Gebrauchsstellung (G) oberhalb der Auszugsstellung (A) ist.

7. Lastenträger nach einem der vorhergehenden Ansprüche, **dadurch gekennzeichnet, dass** die Tragstruktur (14a; 14a'; 14b) mittels der Lageranordnung (26a; 26b) in einer unter einem Stoßfänger (25) des Kraftfahrzeugs (11) hindurch führenden Tauchbewegung zwischen der Nichtgebrauchsstellung (N) und der Gebrauchsstellung (G) bewegbar ist.

8. Lastenträger nach einem der Ansprüche 3 bis 7, **dadurch gekennzeichnet, dass** die Höhenverstelleinrichtung (28a, 28b) manuell, insbesondere mittels eines Kurbeltriebs, betätigbar ist.

9. Lastenträger nach einem der vorhergehenden Ansprüche, **dadurch gekennzeichnet, dass** er eine Motoranordnung (48a, 48b) zum Verlagern der Tragstruktur (14a; 14a'; 14b) auf zumindest einem Teilabschnitt einer Bewegung zwischen der Nichtgebrauchsstellung (N) und der Gebrauchsstellung (G) aufweist, wobei die Motoranordnung (48a, 48b) vorzugsweise einen Motor (47a, 47b) zum Antrieb der Höhenverstelleinrichtung (28a, 28b) umfasst.

10. Lastenträger nach einem der Ansprüche 3 bis 9, **dadurch gekennzeichnet, dass** die Höhenverstelleinrichtung (28a, 28b) eine insbesondere selbsthemmende Spindelanordnung zur Höhenverstellung der Schiebelagerung (18a; 18b) aufweist.

11. Lastenträger nach einem der vorhergehenden Ansprüche, **dadurch gekennzeichnet, dass** die Tragstruktur (14a; 14a'; 14b) ein an der Schiebelagerung (18a; 18b) verschieblich gelagertes Basisteil (31a) und mindestens ein an dem Basisteil (31a) beweglich gelagertes Auslegerteil (32a) aufweist, das in seiner Gebrauchsstellung (G) insbesondere nach hinten vor das Basisteil (31a) vorsteht, wobei vorzugsweise das mindestens eine Auslegerteil (32a) an dem Basisteil (31a) schwenkbeweglich und/oder verschieblich gelagert ist.

12. Lastenträger nach einem der vorhergehenden Ansprüche, **dadurch gekennzeichnet, dass** die Tragstruktur (14a; 14a'; 14b) mindestens eine Halterung, insbesondere eine Steckaufnahme (34), zum Halten eines Erweiterungsbauteils (33) aufweist, wobei das Erweiterungsbauteil (33) vorzugsweise ein Erweiterungsgestell ist, das hinten an die Tragstruktur (14a; 14a'; 14b) ansetzbar ist und deren Lastauflagefläche (17) vergrößert.

13. Lastenträger nach einem der vorhergehenden Ansprüche, **dadurch gekennzeichnet, dass** er eine insbesondere bei der Höhenverstelleinrichtung (28a, 28b) vorgesehene Führung (65) zum Führen der Schiebelagerung (18a; 18b) in konstanter Neigung zur Horizontalen oder in horizontaler Lage beim Verstellen zwischen der oberen und der unteren, zur Fahrbahn (22) näheren Stellung aufweist.

14. Lastenträger nach einem der vorhergehenden Ansprüche, **dadurch gekennzeichnet, dass** zumindest ein Trägerteil, insbesondere das Auslegerteil (32a), der Tragstruktur (14a; 14a'; 14b) zwischen einer für einen Fahrbetrieb des Kraftfahrzeugs (11) vorgesehenen Fahrstellung (F) und einer zum Be- und Entladen des Kraftfahrzeugs (11) vorgesehenen Ladestellung (L) verstellbar ist, wobei das Trägerteil einer auf ihr angeordneten Last (15) in der Ladestellung (L) einen Schwenkbereich (36) einer Heckklappe (37) oder einer Hecktür des Kraftfahrzeugs (11) freigibt.

15. Lastenträger nach einem der vorhergehenden Ansprüche, **dadurch gekennzeichnet, dass** die Tragstruktur (14a; 14a'; 14b) mindestens eine Fahrradhalterung (63) zum Halten eines Fahrrades(16) aufweist.

## Claims

1. Load carrier for a motor vehicle , in particular a car, with a support structure (14a; 14a'; 14b) for carrying a load (15), and with a sliding bearing (18a; 18b) on which the support structure (14a; 14a'; 14b) is slidably mounted, wherein the support structure (14a; 14a'; 14b) may be moved between an inoperative position (N) and a position of use (G), wherein in the position of use (G) the support structure (14a; 14a'; 14b) extends rearwards beyond a rear area (13) of the motor vehicle (11) for the placing of a load (15), and in the inoperative position (N) it is located in a rest position area (12) in the rear area (13) of the motor vehicle (11) at least substantially concealed by a rear section (24) of the motor vehicle (11), wherein the sliding bearing (18a; 18b) is mounted movable relative to the motor vehicle (11) on a bearing assembly (26a; 26b), with which a section of the support structure (14a; 14a'; 14b) is adjustable between an upper position further away from the road surface (22) and a lower extended position (A) closer to the road surface (22), **characterised in that** the bearing assembly (26a; 26b) has a swivel bearing assembly (29) for swivelling the support structure (14a; 14a'; 14b) relative to a horizontal, and that the support structure (14a; 14a'; 14b) may be moved in the lower position by means of the sliding bearing (18a; 18b) past a lower section (23) of the rear section (24), in particular a bumper (25) of the motor vehicle (11), towards or away from the rest position area (12).

2. Load carrier according to claim 1, **characterised in that** the height-adjustable section of the support structure (14a; 14a'; 14b) is a more rearward section of the support structure (14a; 14a'; 14b), closer to the rear of the motor vehicle (11).

3. Load carrier according to claim 1 or 2, **characterised in that** the bearing assembly (26a; 26b) includes a height-adjustment device (28a, 28b) for shifting the sliding bearing (18a; 18b) between an upper position further away from the road surface (22) and a lower position closer to the road surface (22).

4. Load carrier according to claim 3, **characterised in that** the height-adjustment device (28a, 28b) and the swivel bearing assembly (29) are spaced apart in the vehicle longitudinal direction (20) of the motor vehicle (11), wherein expediently the swivel bearing assembly (29) is further removed from the rear of the motor vehicle (11) than the height-adjustment device (28a, 28b).

5. Load carrier according to one of claims 3 or 4, **characterised in that** the sliding bearing (18a; 18b) is mounted pivotably on the height-adjustment device (28a, 28b).

6. Load carrier according to any of claims 3 to 5, **characterised in that** the height-adjustment device (28a, 28b) is a linear height-adjustment device (28a, 28b) and/or that the support structure (14a; 14a'; 14b) is above the extended position (A) in the position of use (G).

7. Load carrier according to any of the preceding claims, **characterised in that** the support structure (14a; 14a'; 14b) may be moved by means of the bearing assembly (26a; 26b), in a dipping movement guiding beneath a bumper (25) of the motor vehicle (11), between the inoperative position (N) and the position of use (G).

8. Load carrier according to any of claims 3 to 7, **characterised in that** the height-adjustment device (28a, 28b) may be operated manually, in particular by means of a crank mechanism.

9. Load carrier according to any of the preceding claims, **characterised in that** it has a motor assembly (48a, 48b) for shifting the support structure (14a; 14a'; 14b) on at least a partial section of a movement between the inoperative position (N) and the position of use (G), wherein the motor assembly (48a, 48b) preferably includes a motor (47a, 47b) for driving the height-adjustment device (28a, 28b).

10. Load carrier according to any of claims 3 to 9, **characterised in that** the height-adjustment device (28a, 28b) has a spindle assembly, in particular self-locking, for adjusting the height of the sliding bearing (18a; 18b).

11. Load carrier according to any of the preceding claims, **characterised in that** the support structure (14a; 14a'; 14b) has a base part (31 a) mounted movably on the sliding bearing (18a; 18b) and at least one crossbeam part (32a) mounted movably on the base part (31a) and in its position of use (G) protruding in particular rearwards beyond the base part (31a), wherein preferably the crossbeam part or parts (32a) is or are mounted with the ability to swivel and/or move on the base part (31 a).

12. Load carrier according to any of the preceding claims, **characterised in that** the support structure (14a; 14a'; 14b) has at least one holder, in particular a socket (34), for holding an extension member (33), wherein the extension member (33) is preferably an extension rack which may be attached to the rear of the support structure (14a; 14a'; 14b) and enlarges its load placing area (17).

13. Load carrier according to any of the preceding claims, **characterised in that** it has a guide (65), in particular provided on the height-adjustment device (28a, 28b), for guiding the sliding bearing (18a; 18b) at a constant angle to the horizontal or in a horizontal alignment during movement between the upper position and the lower position closer to the road surface (22).

14. Load carrier according to any of the preceding claims, **characterised in that** at least one supporting part, in particular the crossbeam part (32a), of the support structure (14a; 14a'; 14b) may be shifted between a vehicle running position (F) provided for vehicle operation of the motor vehicle (11), and a loading position (L) provided for loading and unloading the motor vehicle (11), wherein the supporting part of a load (15) arranged on it in the loading position (L) releases a swivelling area (36) of a tailgate (37) or a rear door of the motor vehicle (11).

15. Load carrier according to any of the preceding claims, **characterised in that** the support structure (14a; 14a'; 14b) has at least one cycle rack (63) for holding a cycle (16).

## Revendications

1. Support de charge pour un véhicule automobile, en particulier pour une voiture particulière, comprenant une structure porteuse (14a ; 14a' ; 14b) servant à supporter une charge (15), et comprenant un logement coulissant (18a ; 18b), au niveau duquel est logée la structure porteuse (14a ; 14a' ; 14b) de manière à pouvoir être déplacée par coulissement, sachant que la structure porteuse (14a ; 14a' ; 14b) peut être déplacée entre une position de non utilisation (N) et une position d'utilisation (G), sachant que la structure porteuse (14a ; 14a' ; 14b) fait saillie, dans la position d'utilisation (G) afin de recevoir une charge (15), vers l'arrière d'une zone arrière (13) du véhicule automobile (11) et est disposée, dans la position de non utilisation (N), dans la partie arrière (13) du véhicule automobile (11), dans une zone de position de repos (12) au moins essentiellement couverte par une partie arrière (24) du véhicule automobile (11), sachant que le logement coulissant (18a ; 18b) est logé au niveau d'un ensemble de paliers (26a ; 26b) de manière mobile par rapport au véhicule automobile (11), à l'aide duquel ensemble de paliers une section de la structure porteuse (14a ; 14a' ; 14b) peut être déplacée entre une position supérieure plus éloignée d'une chaussée (22) et une position d'extraction (A) inférieure plus proche de la chaussée (22), **caractérisé en ce que** l'ensemble de paliers (26a ; 26b) présente un ensemble de paliers pivotants (29) servant à faire pivoter la structure porteuse (14a ; 14a' ; 14b') par rapport à une horizontale, et **en ce que** la structure porteuse (14a ; 14a' ; 14b) peut être déplacée par coulissement dans la position inférieure, le long d'une section inférieure (23) de la partie arrière (24), en particulier le long d'un pare-chocs (25) du véhicule automobile (11), en direction de la zone de position de repos (12) ou en dehors de cette dernière au moyen du logement coulissant (18a ; 18b).

2. Support de charge selon la revendication 1, **caractérisé en ce que** la section réglable en hauteur de la structure porteuse (14a ; 14a' ; 14b) est une zone arrière, plus proche de l'arrière du véhicule automobile (11), de la structure porteuse (14a ; 14a' ; 14b).

3. Support de charge selon la revendication 1 ou 2, **caractérisé en ce que** l'ensemble de paliers (26a ; 26b) comprend un dispositif de réglage en hauteur (28a, 28b) servant à déplacer le logement coulissant (18a ; 18b) entre une position supérieure éloignée d'une chaussée (22) et une position inférieure plus proche de la chaussée (22).

4. Support de charge selon la revendication 3, **caractérisé en ce que** le dispositif de réglage en hauteur (28a, 28b) et l'ensemble de paliers pivotants (29) sont espacés l'un par rapport à l'autre dans la direction longitudinale (20) du véhicule automobile (11), sachant que l'ensemble de paliers pivotants (29) est de manière appropriée davantage éloigné de l'arrière du véhicule automobile (11) que le dispositif de réglage en hauteur (28a, 28b).

5. Support de charge selon l'une quelconque des revendications précédentes 3 ou 4, **caractérisé en ce que** le logement coulissant (18a ; 18b) est logé de manière à pouvoir pivoter au niveau du dispositif de réglage en hauteur (28a, 28b).

6. Support de charge selon l'une quelconque des revendications 3 à 5, **caractérisé en ce que** le dispositif de réglage en hauteur (28a, 28b) est un dispositif de réglage en hauteur linéaire (28a, 28b), et/ou **en ce que** la structure porteuse (14a ; 14a' ; 14b) est, dans la position d'utilisation (G), au-dessus de la position d'extraction (A).

7. Support de charge selon l'une quelconque des revendications précédentes, **caractérisé en ce que** la structure porteuse (14a ; 14a' ; 14b) peut être déplacée entre la position de non utilisation (N) et la position d'utilisation (G), au moyen de l'ensemble de paliers (26a ; 26b) selon un mouvement plongeant menant sous un pare-chocs (25) du véhicule automobile (11).

8. Support de charge selon l'une quelconque des revendications 3 à 7, **caractérisé en ce que** le dispositif de réglage en hauteur (28a, 28b) peut être actionné manuellement, en particulier au moyen d'un mécanisme à bielle et manivelle.

9. Support de charge selon l'une quelconque des revendications précédentes, **caractérisé en ce qu'**il présente un ensemble moteur (48a, 48b) servant à déplacer la structure porteuse (14a ; 14a' ; 14b) sur au moins une section partielle d'un déplacement entre la position de non utilisation (N) et la position d'utilisation (G), sachant que l'ensemble moteur (48a, 48b) comprend de préférence un moteur (47a, 47b) servant à entraîner le dispositif de réglage en hauteur (28a, 28b).

10. Support de charge selon l'une quelconque des revendications 3 à 9, **caractérisé en ce que** le dispositif de réglage en hauteur (28a, 28b) présente un ensemble de broches en particulier autobloquant servant au réglage en hauteur du logement coulissant (18a ; 18b).

11. Support de charge selon l'une quelconque des revendications précédentes, **caractérisé en ce que** la structure porteuse (14a ; 14a' ; 14b) présente une partie de base (31 a) logée de manière à pouvoir être déplacée par coulissement au niveau du logement coulissant (18a ; 18b) et au moins une partie formant un bras (32a) logée de manière mobile au niveau de la partie de base (31 a), ladite partie bras faisant saillie dans sa position d'utilisation (G) en particulier vers l'arrière de la partie de base (31 a), sachant que de préférence la partie formant un bras (32a) au moins au nombre de une est logée de manière mobile en pivotement et/ou de manière mobile par coulissement au niveau de la partie de base (31 a).

12. Support de charge selon l'une quelconque des revendications précédentes, **caractérisé en ce que** la structure porteuse (14a ; 14a' ; 14b) présente au moins un système de fixation, en particulier un logement par enfichage (34), servant à maintenir un élément de prolongement (33), sachant que ledit élément de prolongement (33) est de préférence un bâti de prolongement, qui peut être mis en place à l'arrière au niveau de la structure porteuse (14a ; 14a' ; 14b) et qui agrandit la surface d'appui de la charge (17) de ladite structure porteuse.

13. Support de charge selon l'une quelconque des revendications précédentes, **caractérisé en ce qu'**il présente un guidage (65) prévu en particulier sur le dispositif de réglage en hauteur (28a, 28b) servant à guider le logement coulissant (18a ; 18b) selon une inclinaison constante par rapport à l'horizontale ou dans une position horizontale lors du déplacement entre la position supérieure et la position inférieure plus proche de la chaussée (22).

14. Support de charge selon l'une quelconque des revendications précédentes, **caractérisé en ce qu'**au moins une partie de support, en particulier la partie formant un bras (32a), de la structure porteuse (14a ; 14a' ; 14b) peut être déplacée entre une position de marche (F) prévue pour un véhicule automobile (11) en circulation et une position de charge (L) prévue aux fins du chargement et du déchargement du véhicule automobile (11), sachant que la partie de support d'une charge (15) disposée sur cette dernière libère, dans la position de charge (L) une zone de pivotement (36) d'un hayon arrière (37) ou d'une portière arrière du véhicule automobile (11).

15. Support de charge selon l'une quelconque des revendications précédentes, **caractérisé en ce que** la structure porteuse (14a ; 14a' ; 14b) présente au moins un système de fixation de bicyclette (63) servant à maintenir une bicyclette (16).
